# EUROPÄISCHE PATENTANMELDUNG

(11) **EP 1 577 608 A2**
(43) Veröffentlichungstag der Anmeldung: **21.09.2005**
(21) Anmeldenummer: 05004220.9
(22) Anmeldetag: 25.02.2005
(51) Int. Cl.: F21V 5/00, F21V 13/04

(54) **Leuchte mit einer die Abstrahlung beeinflussenden optischen Struktur**

(30) Priorität: 16.03.2004 DE 102004012654
(71) Anmelder: Schefenacker Vision Systems Germany GmbH, 73730 Esslingen (DE)
(72) Erfinder: Luce, Thomas Dr., 73730 Esslingen (DE)
(74) Vertreter: Schmid, Rudolf

(57) **Zusammenfassung**

Die Erfindung betrifft eine Leuchte, die eine Lichtquelle und mindestens ein dieser optisch nachgeschaltetes zumindest bereichsweise transparentes Element umfasst, wobei das bereichsweise transparente Element eine die Abstrahlung der Leuchte beeinflussende optische Struktur aufweist. Dazu umfasst die optische Struktur mindestens ein Feld gleichartiger optischer Elemente.

Mit der vorliegenden Erfindung wird eine Leuchte entwickelt, bei der Maßabweichungen des Reflektors oder einer Linse nicht die Verteilung des Lichtbündels der Leuchte beeinflussen.

## Beschreibung

Die Erfindung betrifft eine Leuchte, die eine Lichtquelle und mindestens ein dieser optisch nachgeschaltetes zumindest bereichsweise transparentes Element umfasst, wobei das bereichsweise transparente Element eine die Abstrahlung der Leuchte beeinflussende optische Struktur aufweist.

Heute verfügbare Leuchten erzeugen die gewünschten Bündelverteilungen entweder durch reflektive Elemente, das sind z.B. entsprechend ausgerichtete und geformte Spiegelflächen, oder durch refraktive optische Elemente, z.B. Linsen in der Lichtscheibe. Maßabweichungen und Abweichungen der optischen Eigenschaften des Reflektors und/oder der Linse führen beispielsweise zu Verzerrungen des Lichtbündels der Leuchte.

Der vorliegenden Erfindung liegt daher die Problemstellung zugrunde, eine Leuchte zu entwickeln, bei der Maßabweichungen und Abweichungen der optischen Eigenschaften des Reflektors oder einer Linse nicht die Verteilung des Lichtbündels der Leuchte beeinflussen.

Diese Problemstellung wird mit den Merkmalen des Hauptanspruches gelöst. Dazu umfasst die optische Struktur mindestens ein Feld gleichartiger optischer Elemente.

Weitere Einzelheiten der Erfindung ergeben sich aus den Unteransprüchen und der nachfolgenden Beschreibung schematisch dargestellter Ausführungsformen.
- Figur 1:: Schnitt durch eine Leuchte mit optischen Strukturen auf der Abschlussscheibe;
- Figur 2:: Schnitt durch eine Leuchte mit einer klaren Abschlussscheibe.

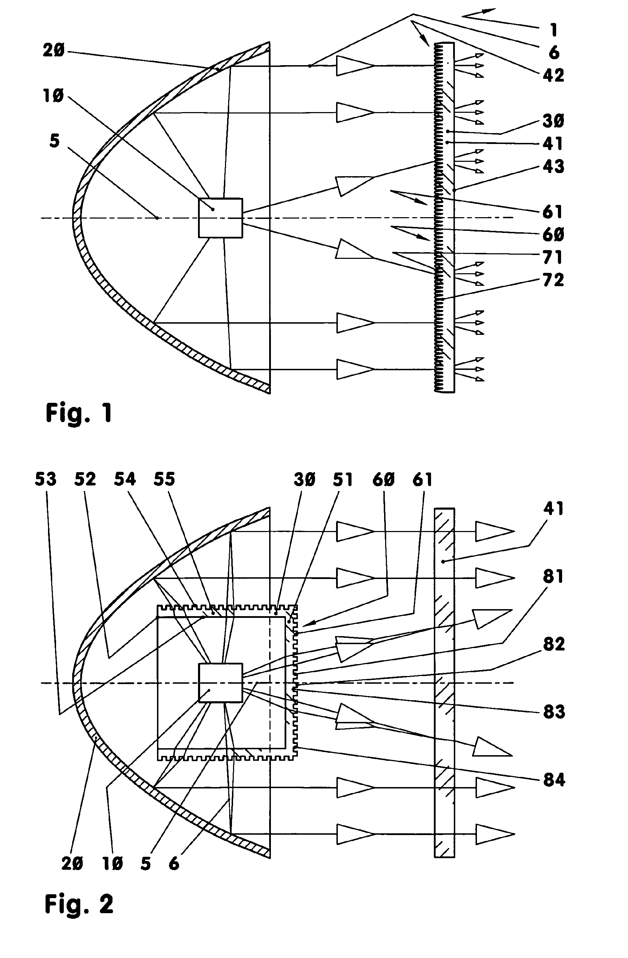

Die Figur 1 zeigt einen Schnitt durch eine Leuchte, die z.B. in einem hier nicht dargestellten Gehäuse angeordnet ist. Die Leuchte ist beispielsweise die Heckleuchte eines Kraftfahrzeuges. Sie umfasst z.B. eine Lichtquelle (10), einen Reflektor (20) und ein zumindest bereichsweise transparentes Element (30). Das bereichsweise transparente Element (30) besteht unter anderem aus einer Abschlussscheibe (41). Ein Teil des von der Lichtquelle (10) abgestrahlten Lichts (6) wird beispielsweise - hier nicht dargestellt - direkt durch die Abschlussscheibe (41) in die Umgebung (1) ausgesandt, ein anderer Teil wird am Reflektor (20) in Richtung der Abschlussscheibe (41) reflektiert und durchdringt dann die Abschlussscheibe (41).

Die Lichtquelle (10) kann eine Glühlampe, eine Halogenlampe, eine Leuchtdiode, etc. sein. Sie erzeugt beispielsweise weißes Licht (6). Die Lichtquelle (10) ist hier z.B. auf der Mittellinie (5) der Leuchte beispielsweise im Brennpunkt des z.B. paraboloidförmigen Reflektors (20) angeordnet. Sie kann aber auch versetzt zur Mittellinie (5) und/oder zum Brennpunkt des Reflektors (20) liegen.

Der Reflektor (20) kann auch die Gestalt eines Kugelabschnitts, eines Hyperboloiden, eines Ellipsoiden etc. haben. Auch Mischformen sind denkbar. Die Leuchte kann auch ohne Reflektor (20) ausgeführt sein.

Die Abschlussscheibe (41) ist beispielsweise eine runde Scheibe, die z.B. normal zur Mittellinie (5) der Leuchte ausgerichtet ist. Die der Lichtquelle (10) zugewandte Oberfläche (42) der Abschlussscheibe (41) ist beispielsweise zumindest bereichsweise mit einer optischen Struktur (60) versehen. Die der Umgebung (1) zugewandte Oberfläche (43) ist eine ebene Fläche.

Die Abschlussscheibe (41) kann auch konvex oder konkav gewölbt sein, sie kann aber auch ein- oder mehrachsig gebogen sein. Die beiden Oberflächen (42, 43) können die Gestalt optischer Linsen haben. Sie können einen konstanten oder einen nicht konstanten Abstand voneinander haben. Die Gestalt der Abschlussscheibe (41) kann eckig, elliptisch, oval etc. sein.

Die optische Struktur (60) umfasst beispielsweise ein Feld gleichartiger optischer Elemente (61). Das einzelne optische Element ist z.B. eine optische Linse (71). In der Figur 1 sind die optischen Linsen (71) nicht maßstabsgerecht dargestellte Erhebungen in der Oberfläche (42) der Abschlussscheibe (41). Die einzelne optische Linse (71) hat beispielsweise die Gestalt eines Kegels mit einer abgerundeten Spitze. Der Querschnitt am Fußpunkt (72) der optischen Linse (71) beträgt beispielsweise etwa 10 Mikrometer. Die Höhe der einzelnen optischen Linse (71) ist z.B. kleiner als ein Millimeter. Die einzelnen optischen Linsen (71) sind beispielsweise in einer regelmäßigen Matrix in Zeilen und Spalten auf der Abschlussscheibe (41) angeordnet. Die einzelnen optischen Linsen (71) können auch diagonal zueinander versetzt sein, sie können auf polaren Strahlen liegen, spiralförmig angeordnet sein, etc. Die optischen Linsen (71) können anstatt Erhebungen auch Einsenkungen der Oberfläche (42) sein. Auch eine Kombination von Erhebungen und Einsenkungen ist denkbar. Die Gestalt der einzelnen optischen Linse (71) kann die Gestalt eines Zylinderabschnitts, eines Kugelabschnitts, eines Quaders, einer Pyramide, eines unregelmäßigen Körpers, etc. haben.

Die optische Struktur (60) kann auch auf der der Umgebung (1) zugewandten Oberfläche (43) angeordnet sein. Sie kann Teil der Abschlussscheibe (41) oder beispielsweise Teil einer Folie sein, die auf der Abschlussscheibe (41) aufgebracht ist. Auch zwei ggf. unterschiedliche optische Strukturen (60), von denen z.B. die eine auf der der Lichtquelle (10) zugewandten Oberfläche (42) und die andere auf der der Lichtquelle (10) abgewandten Oberfläche (43) der Abschlussscheibe (41) angeordnet ist, sind denkbar. Diese optischen Strukturen (60) können versetzt oder verschwenkt zueinander angeordnet sein. Bei Anordnung der optischen Struktur (60) auf einer Oberfläche (42, 43) der Abschlussscheibe (41) kann diese auch aus mehreren Teilbereichen bestehen, wobei z.B. die Teilbereiche durch Bereiche ohne optische Strukturen (60) getrennt sind. Die optische Struktur (60) kann als Zwischenschicht, z.B. höherer Dichte, in der Abschlussscheibe (41) ausgebildet sein. Diese Zwischenschicht kann parallel oder nichtparallel zu einer Oberfläche (42, 43) der Abschlussscheibe (41) liegen.

Beim Betrieb der Leuchte trifft das von der Lichtquelle (10) ausgesandte Licht (6), teilweise am Reflektor (20) reflektiert, auf die transparente Abschlussscheibe (41). Beim Eintritt in die Abschlussscheibe (41) wird das Licht (6) an den optischen Strukturen (60) gebrochen und/oder gebeugt. Beim Austritt aus der Abschlussscheibe (41) wird das Licht (6) gebrochen. Die der Umgebung (1) zugewandte Oberfläche (43) der Abschlussscheibe (41) sieht milchig aus. Von weitem erscheint die Leuchte homogen ausgeleuchtet.

Auf oder in der Abschlussscheibe (41) können auch diffraktive optische Elemente angeordnet sein. Dies sind beispielsweise optische Gitter. Sie umfassen z.B. eine Vielzahl gleichartiger Blenden und Spalte, die zumindest in einem Feld (61) regelmäßig angeordnet auf oder in der Abschlussscheibe (41) liegen. In dieser Matrix sind die Blenden lichtundurchlässig, während die Spalte lichtdurchlässig sind. Das durch die Abschlussscheibe durchtretende Licht (6) wird beim Durchtritt der optischen Struktur (60) gebeugt und interferiert mit dem Licht (6), das durch die benachbarten Spalte durchtritt. Die Lichtquelle (10) erzeugt in diesem Fall beispielsweise monochromatisches Licht (6).

Die Figur 2 zeigt einen Schnitt durch eine Leuchte mit einer klaren Abschlussscheibe (41). Diese Leuchte umfasst außerdem eine Lichtquelle (10), ein zumindest bereichsweise transparentes Element (30) und einen Reflektor (20). Das bereichsweise transparente Element (30) ist z.B. eine Kappe (51). Die Lichtquelle (10) ist hier beispielsweise eine monochromatische Lichtquelle (10). Gegebenenfalls kann die Leuchte auch ohne den Reflektor (20) ausgeführt sein.

Die Kappe (51) hat z.B. die Gestalt eines Hohlquaders mit einer Öffnung (52) und umschließt die Lichtquelle (10) auf fünf Seiten. Die Öffnung (52) zeigt beispielsweise in Richtung des Reflektors (20). Die Innenwandflächen (53) der Kappe (51) sind z.B. ebene Flächen. Auf der äußeren Oberfläche (54) der Kappe (51) sind optische Strukturen (60) angeordnet. Diese optischen Strukturen (60) sind ein Feld gleichartiger optischer Elemente (61), beispielsweise diffraktiver optischer Elemente (81). Die diffraktiven optischen Elemente (81) sind beispielsweise gestuft angeordnete Flächenelemente (82, 83), die auf z.B. zwei zueinander parallelen Ebenen liegen. Diese Flächenelemente (82, 83) sind z.B. lichtdurchlässige Spalte (82, 83). Beispielsweise normal zu diesen Spalten (82, 83) sind lichtundurchlässige Blenden (84) angeordnet.

Die diffraktiven optischen Elemente (81) können beispielsweise optische Gitter sein, deren Blenden und Spalten entlang ihrer Länge keine konstante Breite haben. Sie können auch wellenförmig angeordnet sein, sich schneiden oder kreuzen, etc. Die Breite der einzelnen Spalte (82, 83) und Blenden (84) kann beispielsweise zwischen der Wellenlänge des emittierten Lichtes (6) und einem Zehntel Millimeter liegen.

Statt auf der äußeren Oberfläche (54) können die optischen Strukturen (60) auch auf den Innenwandflächen (53) angeordnet sein. Sie können beispielsweise Teil einer Folie sein, die auf einer der Oberflächen (53, 54) aufgebracht ist. Auch eine Anordnung der optischen Strukturen (60) auf den Innenwandflächen (53) und auf den äußeren Oberflächen (54) ist denkbar. Die optischen Strukturen (60) können in den Wänden (55) der Kappe (51) z.B. als Zwischenschicht eingelegt sein.

Die Kappe (51) kann die Gestalt einer Hohlkugel, eines Hohlellipsoids, etc. haben. Die Innenwandflächen (53) und die äußeren Oberflächen (54) können gewölbt sein, Kanten aufweisen, etc. Sie können auch nichtparallel zueinander angeordnet sein. Der Abstand der Kappe (51) von der Lichtquelle (10) ist größer als die Wellenlänge des ausgesandten Lichtes (6).

Anstatt eines Feldes (61) diffraktiver optischer Elemente (81) kann die Kappe (51) auch ein Feld (61) optischer Linsen (71) aufweisen. Auch eine Kombination von Feldern (61) diffraktiver optischer Elemente (81) und Feldern (61) optischer Linsen (71) ist denkbar.

Auch die Abschlussscheibe (41) der in der Figur 2 dargestellten Leuchte kann eine optische Struktur (60) umfassen. Diese kann aus Feldern (61) diffraktiver optischer Elemente (81) und/oder aus Feldern (61) optischern Linsen (71) bestehen. Die Abschlussscheibe (41) kann eben oder gewölbt sein.

Beim Betrieb der Leuchte durchdringt ein Teil des von der Lichtquelle (10) ausgesandten Lichts (6) die Kappe (51). Hierbei wird es an den diffraktiven optischen Elementen (81) gebeugt und/oder gebrochen. Ein Teil dieses Lichts (6) wird am Reflektor (20) in Richtung der Abschlussscheibe (41) reflektiert, ein anderer Teil dieses Lichts (6) wird von der Kappe (51) direkt zur Abschlussscheibe (41) ausgesandt. Beim Durchtritt durch die Abschlussscheibe (41) wird das Licht (6) nur gering beeinflusst. In der Umgebung (1) bildet sich ein aufgrund der vielen Spalten (82, 83) ein ausgeprägtes Maximum Nullter Ordnung.

Aus der Umgebung (1) betrachtet, erscheint das Licht (6) der Leuchte homogen.

Die Leuchte ist in diesem Ausführungsbeispiel aufgrund der zur Umgebung (1) hin z.B. glatten Oberfläche (43) weitgehend unempfindlich gegen Verschmutzung.

Eine Maßabweichung oder eine Abweichung der optischen Eigenschaften des Reflektors (20) oder einer optischen Linse beeinflusst nicht die Verteilung des Lichtbündels der Leuchte.

### Bezugszeichenliste:

- 1: Umgebung
- 5: Mittellinie
- 6: Licht

- 10: Lichtquelle

- 20: Reflektor

- 30: bereichsweise transparentes Element

- 41: Abschlussscheibe
- 42: Oberfläche von (41), (10) zugewandt
- 43: Oberfläche von (41), (1) zugewandt

- 51: Kappe
- 52: Öffnung
- 53: Innenwandflächen von (51)
- 54: äußere Oberfläche von (51)
- 55: Wände von (51)

- 60: optische Struktur
- 61: Feld gleichartiger optischer Elemente

- 71: optische Linse
- 72: Fußpunkt

- 81: diffraktive optische Elemente
- 82: Flächenelemente, Spalte
- 83: Flächenelemente, Spalte
- 84: Blenden

## Patentansprüche

1. Leuchte, die eine Lichtquelle und mindestens ein dieser optisch nachgeschaltetes zumindest bereichsweise transparentes Element umfasst, wobei das bereichsweise transparente Element eine die Abstrahlung der Leuchte beeinflussende optische Struktur aufweist, **dadurch gekennzeichnet,**
**dass** die optische Struktur (60) mindestens ein Feld gleichartiger optischer Elemente (61) umfasst.

2. Leuchte nach Anspruch 1, **dadurch gekennzeichnet, dass** das Feld gleichartiger optischer Elemente (61) matrixartig angeordnet ist.

3. Leuchte nach Anspruch 1, **dadurch gekennzeichnet, dass** die optische Struktur (60) optische Linsen (71) und/oder diffraktive optische Elemente (81) umfasst.

4. Leuchte nach Anspruch 1, **dadurch gekennzeichnet, dass** der Lichtquelle (10) ein Reflektor (20) optisch nachgeschaltet ist.

5. Leuchte nach Anspruch 4, **dadurch gekennzeichnet, dass** das bereichsweise transparente Element (30) dem Reflektor (20) optisch nachgeschaltet ist.

6. Leuchte nach Anspruch 1, **dadurch gekennzeichnet, dass** dem bereichsweise transparenten Element (30) eine Abschlussscheibe (41) optisch nachgeschaltet ist.

7. Leuchte nach Anspruch 1, **dadurch gekennzeichnet, dass** das bereichsweise transparente Element (30) eine Kappe (51) ist, die die Lichtquelle (10) zumindest bereichsweise umgibt.

8. Leuchte nach Anspruch 1, **dadurch gekennzeichnet, dass** die Lichtquelle (10) monochromatisch ist.

9. Leuchte nach Anspruch 1, **dadurch gekennzeichnet, dass** die maximale Ausdehnung des einzelnen optischen Elements (71, 81) kleiner ist als ein Millimeter.
